# EUROPEAN PATENT APPLICATION

(11) **EP 4 192 197 A1**
(43) Date of publication of application: **07.06.2023**
(21) Application number: 21211834.3
(22) Date of filing: 01.12.2021
(51) Int. Cl.: H05B 47/19, H04W 88/16, H04W 84/18, H04L 67/12, H04L 67/025, H04L 67/04

(54) **IOT GATEWAY**

(71) Applicant: BIOT Sp. z o.o., 66-002 Zielona Gora (PL)
(72) Inventor: Lewandowski, Wojciech, 65-124 Zielona Gora (PL)
(74) Representative: Gornicki, Pawel

(57) **Abstract**

IOT gateway, containing a power supply circuitry, central computer, wired communication module and wireless communication module, **wherein** central computer (1) is connected with Ethernet wired communication module (2) and at least two receiving-transmitting modules of radio communication (Mn), each of which constitutes a data transmission node of own, independent, wireless radio network in mesh topology, where in each receiving-transmitting module of radio communication (Mn) there is a software managing its own radio network, where the information is transmitted within the radio network through a receiving-transmitting radio communication module (Mn) specific for this network, can be transmitted to central computer (1), on which there is a dedicated software managing the IOT gateway, in particular transmitting vital information to other receiving-transmitting modules of radio communication (Mn) of the IOT gateway, and to their own radio networks, as well as to central management system (CMS), through a long range networks.

## Description

The subject of the invention is an IOT gateway, constituting a gate for mesh radio transmission, having use in monitoring-managing systems for dispersed measuring-operating infrastructure, enabling local communication of measuring and measuring-operating devices, in free radio communication bands, for example in Smart City systems. IOT Gate according to this invention is dedicated particularly for communication of street light infrastructure devices and for managing these devices.

Dispersed measuring-operating systems are currently managed with a variety of communication solutions, employing both wired and wireless transmission. According to current state of technology, wireless managing systems for street lighting infrastructure employ centralized radio network. Network transmission is supervised by a center point, constituted by a dedicated network gate. End devices organized in a network, communicate via the network gate with a central managing unit. This type of solution fails in case of managing significant number of end devices, dispersed over a large area, particularly in implementations of certain lighting management systems functionalities, requiring high responsiveness of operating devices for signals delivered by sensors, at the same time guaranteeing reliable connection to ensure human safety. An example of such a functionality is on-demand lighting, also called catch-up lighting that follows a moving object.

A description of Chineese utility model CN207166516U reveals a fast gateway based on a multi-functional lighting pole, covering application layer, data layer and physical layer. The physical layer consists of multi-interface module, switching output module and switching input module. The interface module consists of RS484 interface, CAN interface, LAN interface, ZigBee base-station, LORA base-station, WLAN interface, RS484 interface, CAN interface, LAN interface. ZigBee base-station and LORA base-station are connected with data layer encapsulation module. Data layer contains also a hardware port-mapping module, connected with encapsulation module, where WLAN interface and hardware port-mapping module are connected with application protocol layer analysis module, as well as output switching module and input switching module and all are connected with light operating module of application layer. The operating module is connected with protocol analysis module.

The CN210641082U document, on the other hand, reveals an IOT gateway for intelligent street lighting, which can constitute a main communication point of broadband access to internet of things, collecting information about status of broadband enabled street luminaires and based on this, operating switches of street luminaires in order to minimize energy consumption. According to CN210641082U document, the IOT Gateway consists of power supply circuit, lightning protection circuit, managing mainboard, broadband network carrier circuit, LORA wireless communication circuit, 4G communication uplink circuit, USB firmware upgradeability circuit, maintenance serial port circuit, isolated peripheral RS485 extension circuit, 0-10 V dimming circuit, GPS circuit, circuit of accurate calendar clock, commercials display power supply circuit, luminaire power supply managing circuit, intermediate managing circuit, loading stack relay circuit, Ethernet routing communication circuit, loading stack loop's electrical current uptake circuit, luminaire loop's electrical current update circuit, commercials display loop's electrical current update circuit, triple looped power statistics circuit and triple looped voltage acquisition circuit. Both power supply circuit and lightning protection circuit are electrically connected to the managing mainboard. The managing mainboard is respectively connected with broadband network carrier circuit, LORA wireless communication circuit, 4G communication uplink circuit, USB firmware upgradeability circuit, maintenance serial port circuit, isolated peripheral RS485 extension circuit, 0-10 V dimming circuit, GPS circuit, circuit of accurate calendar clock, commercials display power supply circuit, luminaire power supply managing circuit, loading stack's intermediate relay managing circuit. Loading stack loop's electrical current collection circuit, luminaires electrical current collection loop's circuit, commercials display electrical current collection loop's circuit, triple-looped power statistics circuit and triple-looped voltage collection circuit are electrically connected. Managing mainboard is communication-wise connected with Ethernet routing communication circuit through Ethernet network.

The on-demand lighting is an idea of light following a moving object, where the area directly in front of the object is lighted with higher light intensity than the area behind the object. Application of on-demand lighting allows for a very quick delivery of appropriate light intensity in the area where movement has been sensed and for the time of movement duration, in consequence, in selected areas it allows for lowering of light intensity to the level demanded by road managing entity, with a technical capability of abating the light intensity as low as 10% of nominal light intensity, which allows for proportionate lowering of costs generated by lighting infrastructure. In order to ensure safety of the traffic, movement sensors must interact not only with the luminaires, where they are installed but also with a specified number of luminaires in the direct proximity. It is therefore necessary to ensure reliable and high speed communication between local, neighboring objects, allowing for their efficient management.

Thus, the management of on-demand lighting requires operating on a large area and, at the same time, a sufficiently high speed information exchange between managing center and devices of street lighting infrastructure. In order to cope with such requirements, there is a need for a solution facilitating high speed communication within local network, where street lighting infrastructure devices constitute local network nodes, as well as neighboring local networks and managing center. This issue is solved with use of IOT gateway according to this invention, which facilitates wireless radio communication to be used to control status of large number of street lighting infrastructure devices, dispersed on a large area and to manage these devices, to be used in particular in on-demand lighting systems.

IOT Gateway, according to this invention, containing power circuit, central computer, wired communication module and wireless communication module, is characterized by having the central computer connected to Ethernet wired communication interface and with at least two receiving-transmitting radio communication modules, each of which constitutes a transmission node of its own, independent, wireless radio network in mesh topology, where in each of those radio communication modules a dedicated software is running for managing its own radio and the information transmitted within this radio network through its assigned receiving-transmitting module can be transmitted to the central computer, where a dedicated software is running to operate the gateway, in particular to transmit certain vital information to other receiving-transmitting modules of the IOT gateway, as well as their own radio networks, as well as to the central management system (CMS) through a long distance network.

Preferably, the central computer of IOT gateway is connected with three receiving-transmitting modules of radio communication.

Preferably, the central computer of IOT gateway is connected with three receiving-transmitting modules of radio communication.

Preferably, the central computer of IOT gateway is connected with four receiving-transmitting modules of radio communication.

Preferably, the central computer of IOT gateway is connected with five receiving-transmitting modules of radio communication.

Preferably, the central computer of IOT gateway is connected with six receiving-transmitting modules of radio communication.

Preferably, the IOT gateway contains a 2G/3G/4G/5G consumer networks communication module.

Preferably, the IOT gateway contains an auxiliary microcomputer, which is connected to the central computer by means of a wired physical interface.

Preferably, IOT gateway contains an industrial communication interface, connected to the central computer by means of an auxiliary microcomputer.

Preferably, IOT gateway contains a binary inputs module, connected with the central computer by means of an auxiliary microcomputer.

Preferably, IOT gateway contains a binary outputs module, connected with the central computer by means of an auxiliary microcomputer.

Due to the fact, that the central computer of IOT gateway is associated with at least two receiving-transmitting modules of radio communication, each of which constitutes a node of its own, independent mesh network, there is a capability of transmitting information between these local mesh networks through IOT gateway. In such a case, each of receiving-transmitting modules of IOT gateway acts as a regular node of mesh network, so re-directing the information between local networks created by each of receiving-transmitting modules of the IOT gateway is transparent for these local networks and is performed within several milliseconds with security of data fully ensured. This is possible because the IOT gateway is recognized by each of subordinate networks as a trusted source of data.

The auxiliary microcomputer is responsible for realizing supporting functions of router, consisting of: binary inputs control, operating relay outputs and communication with external devices, equipped with physical RS485 interface, which is a communication bus capable of interconnecting up to 32 devices.

In case of devices intended for mounting inside lighting power cabinets, the IOT gateway may contain an industrial communication module. The industrial communication module facilitates a connection between IOT gateway and additional controlling-measuring devices, allowing for monitoring status of energy network, powering the luminaires and other devices associated with receiving-transmitting modules of radio communication, constituting mesh network nodes. The industrial communication module is managed by central computer, to which it is connected by means of auxiliary microcomputer. The auxiliary microcomputer runs software responsible for signal transmission to and from the industrial communication module.

The binary inputs module, connected to the auxiliary microcomputer, allows for connecting monitoring of direct proximity of IOT gateway, mounted inside lighting power cabinet. It is possible to use for example for monitoring closing/opening of cabinet doors, relay state or monitoring of electrical fuses mounted inside the cabinet.

Thanks to outputs relay module, which is connected to auxiliary computer, and which serves to operate relays installed in the lighting power cabinet, it is possible to turn the lighting circuit, and even to create a schedule for automatic powering the lighting circuits on and off.

The subject of the invention will be further explained based on an example of implementation, where figure 1 presents a block diagram of IOT gateway, figure 2 presents a block diagram of IOT gateway, where the central computer is connected with 2G/3G/4G/5G consumer networks communication module, where figure 3 presents a block diagram of IOT gateway, containing an auxiliary microcomputer connected with relay outputs module, binary inputs module and RS485 industrial communication module.

### Example 1.

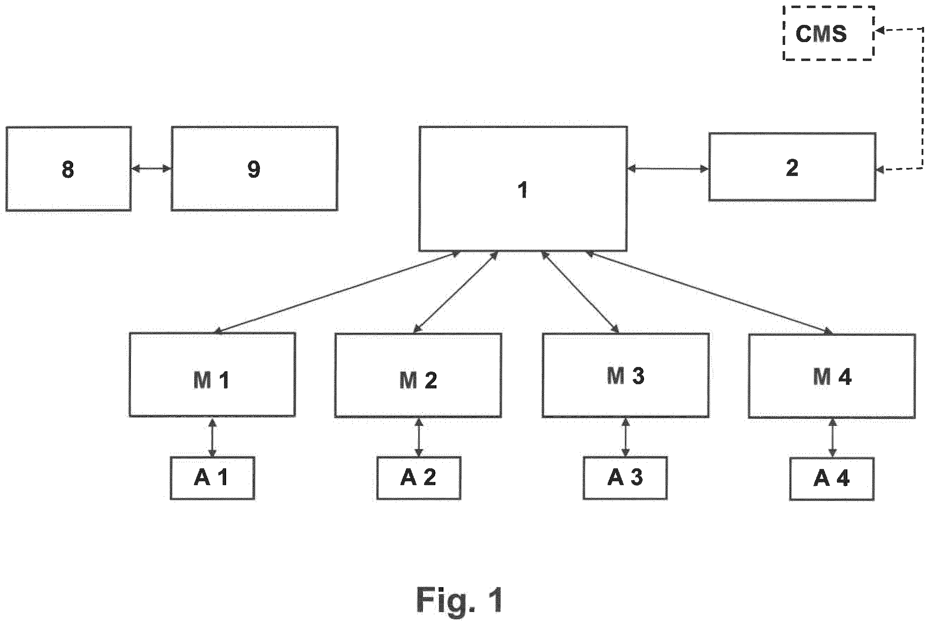

An IOT gateway, as demonstrated in an implementation example presented in figure 1, contains a power supply module 8, connected with power distribution module 9 and central computer 1, that is connected with Ethernet wired communication module 2 and receiving-transmitting modules of radio communication, marked in the figure with Mn symbol, where n represents consecutive module number. The IOT gateway presented in figure 1 contains a central computer 1 connected with four receiving-transmitting modules of radio communication, marked respectively as **M1, M2, M3** and **M4,** where each of receiving-transmitting modules **M1, M2, M3** and **M4** is connected respectively with antenna marked as **A1, A2, A3** and **A4.** Each of **M1, M2, M3** and **M4** receiving-transmitting radio modules constitutes a data transmission node of own, independent, wireless mesh network. The remaining data transmission nodes of this mesh network are constituted by receiving-transmitting modules associated with lighting infrastructure devices, for example luminaires, movement detectors or lighting fixtures equipped with movement detectors. This way the IOT gateway is associated with four independent, local mesh radio communication networks. Each of the receiving-transmitting radio modules **M1, M2, M3** and **M4** runs a local mesh network management software. Each of the local mesh networks works independently from other networks. The information is transmitted among nodes of the local mesh network, however, with an intermediate act of respective receiving-transmitting module of radio network **Mn** they can be also sent to central computer **1.** Central computer **1** runs a software dedicated to managing IOT gateway, among others, to transmitting vital information between receiving-transmitting modules of radio communication **Mn** of IOT gateway, and through them to transmit the information to their respective local mesh networks. If a need occurs, to transmit the information, for example from local mesh network specific to receiving-transmitting module **M1** to a network specific to receiving-transmitting module **M2,** then module **M1** transmits the information to central computer **1,** which in turn transmits the information to the module **M2** of IOT gateway. With an intermediary act of the central computer **1** and long distance networks, the information from mesh networks can also be periodically sent to an external, central management system **CMS.** In the example in question, this is done with use of Ethernet wired interface marked **2.**

### Example 2.

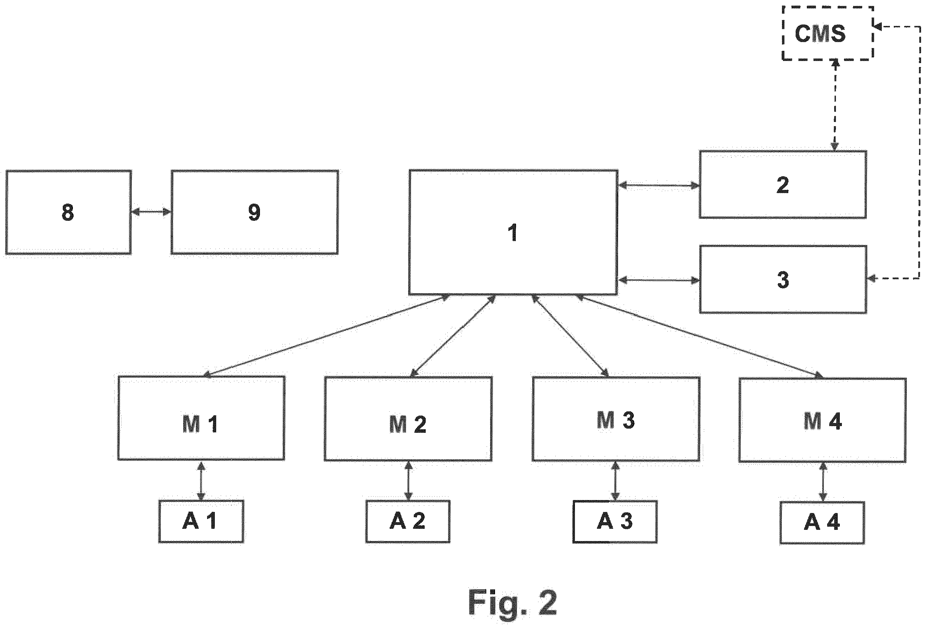

IOT gateway, as demonstrated in an implementation example presented in figure 2, contains additionally a 2G/3G/4G/5G consumer networks communication module **3.** The gateway in such a configuration allows for communication between local mesh networks and central supervising system CMS in a situation, where there is no possibility of wired connection through Ethernet interface **2.**

An advantage of such a solution is a flexibility of IOT gateway installation, that will ensure communication of subordinate mesh networks with CMS system, without a need for expensive Internet connectivity infrastructure.

### Example 3.

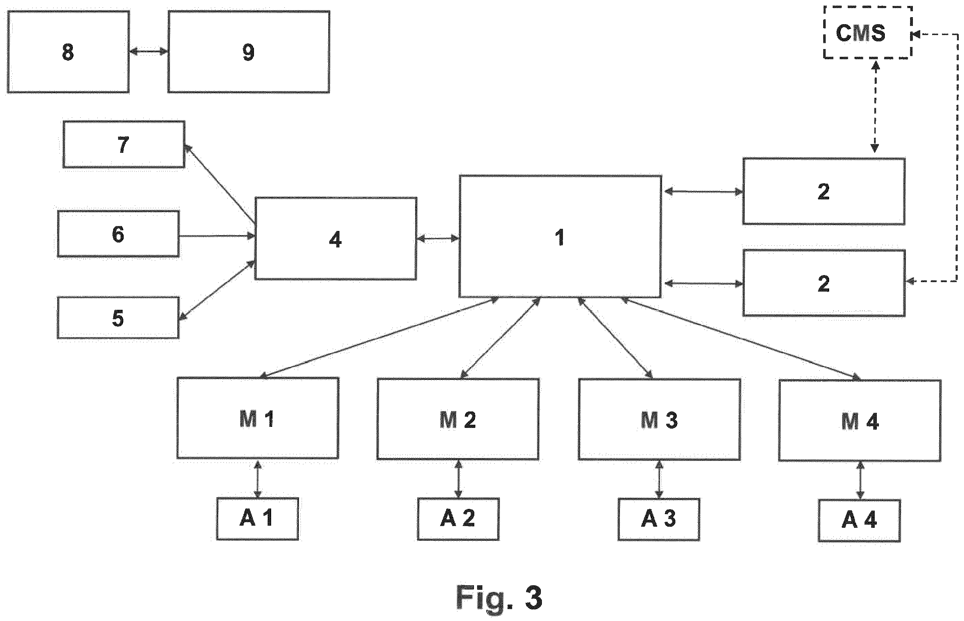

Another example of IOT gateway implementation, as depicted in figure 3, shows an IOT gateway in a configuration as described in Example 2, additionally containing an auxiliary microcomputer 4, which is connected with central computer **1** and with RS485 industrial communication interface **5,** binary inputs module **6** and relay outputs module **7,** connected with auxiliary microcomputer **4.** The IOT gateway in such a configuration is intended for mounting inside lighting power cabinets. The RS485 industrial communication interface **5** allows for connecting additional measuring-controlling devices to IOT gateway, which enable monitoring of lighting power delivery network status as well as other devices associated with receiving-transmitting modules of radio communication, constituting mesh network nodes. The objective of the auxiliary microcomputer **4** is performing auxiliary functions of the gateway, consisting of binary inputs control, operating relay outputs and communicating with external devices, equipped with physical RS485 interface.

## Claims

1. IOT gateway, containing a power supply circuitry, central computer, wired communication module and wireless communication module, **wherein** central computer (1) is connected with Ethernet wired communication module (2) and at least two receiving-transmitting modules of radio communication (Mn), each of which constitutes a data transmission node of own, independent, wireless radio network in mesh topology, where in each receiving-transmitting module of radio communication (Mn) there is a software managing its own radio network, where the information is transmitted within the radio network through a receiving-transmitting radio communication module (Mn) specific for this network, can be transmitted to central computer (1), on which there is a dedicated software managing the IOT gateway, in particular transmitting vital information to other receiving-transmitting modules of radio communication (Mn) of the IOT gateway, and to their own radio networks, as well as to central management system (CMS), through a long range networks.

2. IOT gateway according to patent claim 1, wherein central computer (1) is connected to three receiving-transmitting modules of radio communication (Mn).

3. IOT gateway according to patent claim 1, wherein central computer (1) is connected to four receiving-transmitting modules of radio communication (Mn).

4. IOT gateway according to patent claim 1, wherein central computer (1) is connected to five receiving-transmitting modules of radio communication (Mn).

5. IOT gateway according to patent claim 1, wherein central computer (1) is connected to six receiving-transmitting modules of radio communication (Mn).

6. IOT gateway according to patent claim 1, wherein the IOT gateway contains a 2G/3G/4G/5G consumer networks communication module.

7. IOT gateway according to patent claim 1, wherein the IOT gateway contains an auxiliary microcomputer (4), which is connected to central computer (1) through a wired physical interface.

8. IOT gateway according to patent claim 1, wherein the IOT gateway contains an industrial communication interface (5), which is connected to central computer (1) through an auxiliary microcomputer (4).

9. IOT gateway according to patent claim 1, wherein the IOT gateway contains a binary inputs module (6), which is connected to central computer through an auxiliary microcomputer.

10. IOT gateway according to patent claim 1, wherein the IOT gateway contains a relays output module (7), which is connected to central computer (1) through an auxiliary microcomputer (4).
